# EUROPEAN PATENT APPLICATION

(11) **EP 4 429 289 A1**
(43) Date of publication of application: **11.09.2024**
(21) Application number: 22890409.0
(22) Date of filing: 03.11.2022
(51) Int. Cl.: H04W 8/00, H04W 48/10, H04W 76/14, H04W 88/04, H04W 92/18

(54) **METHOD AND APPARATUS FOR PROVIDING RELAY IN WIRELESS COMMUNICATION SYSTEM**

(30) Priority: 03.11.2021 KR 20210149677; 16.11.2021 KR 20210157247
(71) Applicant: LG Electronics Inc., Yeongdeungpo-gu Seoul 07336 (KR)
(72) Inventor: KIM, Laeyoung, Seoul 06772 (KR)
(74) Representative: Maikowski & Ninnemann Patentanwälte Partnerschaft mbB
(86) International application number: PCT/KR2022/017138
(87) International publication number: WO 2023/080678

(57) **Abstract**

A method of operating a terminal in a wireless communication system may comprise a relay terminal receiving an announcement request message requesting announcement of a tracking area identity (TAI) from a first remote terminal, the relay terminal transmitting an announcement response message as an acknowledgment response to the first remote terminal, and announcing a message including a TAI of a serving cell of the relay terminal based on the announcement request message. Based on one or more other remote terminals other than the first remote terminal being connected to the relay terminal, the relay terminal may transmit a message including the TAI of the serving cell of the relay terminal one or more times.

## Description

### Technical Field

The following description relates to a wireless communication system and a method and apparatus for providing a relay. Specifically, it relates to a method and apparatus for transmitting a message including a tracking area identity (TAI) to a remote terminal (UE).

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and apparatus for providing a relay in a wireless communication system.

The present disclosure relates to a method and apparatus for transmitting a message including a tracking area identity (TAI) to a remote terminal (UE) in a wireless communication system.

The present disclosure relates to a method and apparatus for, at a relay UE, transmitting a relay discovery additional information message including a TAI in a wireless communication system.

The present disclosure relates to a method and apparatus for transmitting a message including a TAI to a remote UE that has not requested the TAI in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a terminal in a wireless communication system may comprise a relay terminal receiving an announcement request message requesting announcement of a tracking area identity (TAI) from a first remote terminal, the relay terminal transmitting an announcement response message as an acknowledgment response to the first remote terminal, and announcing a message including a TAI of a serving cell of the relay terminal based on the announcement request message. Based on one or more other remote terminals other than the first remote terminal being connected to the relay terminal, the relay terminal may transmit a message including the TAI of the serving cell of the relay terminal one or more times.

Also, as an example of the present disclosure, a relay terminal operating in a wireless communication system may comprise at least one transceiver, at least one processor, and at least one memory operatively connected to the at least one processor and configured to store instructions that, when executed, cause the at least one processor to perform a specific operation. The specific operation may comprise controlling the at least one transceiver to receive an announcement request message requesting announcement of a tracking area identity (TAI) from a first remote terminal, controlling the at least one transceiver such that the relay terminal transmits an announcement response message as an acknowledgment response to the first remote terminal, and controlling the at least one transceiver to announce a message including a TAI of a serving cell of the relay terminal based on the announcement request message. Based on one or more other remote terminals other than the first remote terminal being connected to the relay terminal, the relay terminal transmits a message including the TAI of the serving cell of the relay terminal one or more times.

Also, as an example of the present disclosure, a method of operating a terminal in a wireless communication system may comprise a remote terminal transmitting an announcement request message requesting announcement of a tracking area identity (TAI) to a relay terminal, the remote terminal receiving an announcement response message as an acknowledgment response from the relay terminal, and receiving a message including a TAI of a serving cell of the relay terminal from the relay terminal based on the announcement request message. Based on one or more other remote terminals other than the first remote terminal being connected to the relay terminal, the relay terminal may transmit a message including the TAI of the serving cell of the relay terminal one or more times.

Also, as an example of the present disclosure, a terminal operating in a wireless communication system may comprise at least one transceiver, at least one processor, and at least one memory operatively connected to the at least one processor and configured to store instructions that, when executed, cause the at least one processor to perform a specific operation. The specific operation may comprise controlling the at least one transceiver to transmit an announcement request message requesting announcement of a tracking area identity (TAI) to a relay terminal, controlling the at least one transceiver such that the remote terminal receives an announcement response message as an acknowledgment response from the relay terminal, and controlling the at least one transceiver to receive a message including a TAI of a serving cell of the relay terminal from the relay terminal based on the announcement request message. Based on one or more other remote terminals other than the first remote terminal being connected to the relay terminal, the relay terminal may transmit a message including the TAI of the serving cell of the relay terminal one or more times.

Also, as an example of the present disclosure, an apparatus may comprise at least one memory and at least one processor functionally connected to the at least one memory. The at least one processor may control the apparatus to receive an announcement request message requesting announcement of a tracking area identity (TAI) from another apparatus, transmit an announcement response message as an acknowledgment response to the other apparatus and announce a message including a TAI of a serving cell of the apparatus based on the announcement request message. Based on one or more other apparatuses other than the apparatus being connected to the apparatus, the apparatus may transmit a message including the TAI of the serving cell of the apparatus one or more times.

Also, as an example of the present disclosure, a non-transitory computer-readable medium storing at least one instruction may comprise the at least one instruction executable by a processor. The at least one instruction may control an apparatus to receive an announcement request message requesting announcement of a tracking area identity (TAI) from another apparatus, transmit an announcement response message as an acknowledgment response to the other apparatus and announce a message including a TAI of a serving cell of the apparatus based on the announcement request message. Based on one or more other apparatuses other than the apparatus being connected to the apparatus, the apparatus may transmit a message including the TAI of the serving cell of the apparatus one or more times.

In addition, the following matters are commonly applicable.

As an example of the present disclosure, based on one or more other remote terminals other than the first remote terminal being connected to the relay terminal and the connected one or more other remote terminals other than the first remote terminal do not transmit a message requesting announcement of the TAI, a message including the TAI of the serving cell of the relay terminal may be transmitted one or more times.

Also, as an example of the present disclosure, the relay terminal may transmit the message including the TAI of the serving cell of the relay terminal based on implementation of the relay terminal.

Also, as an example of the present disclosure, the request for the TAI of the serving cell of the relay terminal may be made based on an additional parameters announcement procedure, the announcement request message requesting the announcement of the TAI may be an additional parameter announcement request message, the announcement response message may be an additional parameter announcement response message, and the message including the TAI of the serving cell of the relay terminal may be a relay discovery additional information message.

Also, as an example of the present disclosure, the relay terminal may repeatedly transmit the relay discovery additional information message based on a preset period while an additional parameters announcement request refresh timer operates in the relay terminal.

Also, as an example of the present disclosure, based on the relay terminal detecting a new additional parameter or an update of an additional parameter, the relay terminal may transmit the new additional parameter or the updated additional parameter through the relay discovery additional information message.

Also, as an example of the present disclosure, the first remote terminal may request announcement of an additional parameter from the relay terminal based on the additional parameter announcement request message, and the additional parameter may comprise at least one of the TAI of the serving cell of the relay terminal or a NR cell global identifier (NCGI) of the serving cell of the relay terminal.

Also, as an example of the present disclosure, the relay terminal may receive, from the first remote terminal, the additional parameter announcement request message including one-time announcement indication information indicating that the relay terminal announces the additional parameter only one time, and the relay terminal may announce the additional parameter only one time based on the one-time announcement indication information.

Also, as an example of the present disclosure, even if the one-time announcement indication information indicates that the additional parameter is announced only one time, the relay terminal may transmit the additional parameter one or more times based on one or more other remote terminals other than the first remote terminal being connected to the relay terminal.

Also, as an example of the present disclosure, the one-time announcement indication information may be set in the TAI of the serving cell of the relay terminal and the NCGI of the serving cell of the relay terminal, respectively.

Also, as an example of the present disclosure, the relay terminal may perform relay of the first remote terminal through a non-3GPP interworking function (N3IWF), and the first remote terminal may select the N3IWF based on the TAI of the serving cell of the relay terminal

Also, as an example of the present disclosure, based on the announcement request message, the message including the TAI of the serving cell of the relay terminal may be transmitted in broadcast form based on a default destination layer-2 ID set to be used when transmitting a PC5 discovery message.

### Advantageous Effects

The present disclosure can provide a relay in a wireless communication system.

The present disclosure can transmit a message including a tracking area identity (TAI) to a remote UE in a wireless communication system.

In the present disclosure, a relay UE can transmit a relay discovery additional information message including a TAI in a wireless communication system.

The present disclosure has the effect of saving resources and time, by transmitting a message including a TAI to a remote UE that has not requested the TAI in a wireless communication system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a diagram showing a method of performing ProSe communication based on a UE-to-network relay applied to the present disclosure.
FIG. 11 is a diagram showing a method of advertising a TAI through a TAI announcement procedure applicable to the present disclosure.
FIG. 12 is a diagram showing a method of performing an additional parameters announcement procedure applicable to the present disclosure.
FIG. 13 is a diagram showing a method of, at a relay UE applicable to the present disclosure, providing TAI information of a serving cell.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

### 3GPP LTE/EPS

3GPP TS 36.211: Physical channels and modulation
3GPP TS 36.212: Multiplexing and channel coding
3GPP TS 36.213: Physical layer procedures
3GPP TS 36.214: Physical layer; Measurements
3GPP TS 36.300: Overall description
3GPP TS 36.304: User Equipment (UE) procedures in idle mode
3GPP TS 36.306: User Equipment (UE) radio access capabilities
3GPP TS 36.314: Layer 2 - Measurements
3GPP TS 36.321: Medium Access Control (MAC) protocol
3GPP TS 36.322: Radio Link Control (RLC) protocol
3GPP TS 36.323: Packet Data Convergence Protocol (PDCP)
3GPP TS 36.331: Radio Resource Control (RRC) protocol
3GPP TS 36.413: S1 Application Protocol (S1AP)
3GPP TS 36.423: X2 Application Protocol (X2AP)
3GPPP TS 22.125: Unmanned Aerial System support in 3GPP; Stage 1
3GPP TS 23.303: Proximity-based services (Prose); Stage 2
3GPP TS 23.401: General Packet Radio Service (GPRS) enhancements for Evolved Universal Terrestrial Radio Access Network (E-UTRAN) access
3GPP TS 23.402: Architecture enhancements for non-3GPP accesses
3GPP TS 23.286: Application layer support for V2X services; Functional architecture and information flows
3GPP TS 24.301: Non-Access-Stratum (NAS) protocol for Evolved Packet System (EPS); Stage 3
3GPP TS 24.302: Access to the 3GPP Evolved Packet Core (EPC) via non-3GPP access networks; Stage 3
3GPP TS 24.334: Proximity-services (ProSe) User Equipment (UE) to ProSe function protocol aspects; Stage 3
3GPP TS 24.386: User Equipment (UE) to V2X control function; protocol aspects; Stage 3

### 3GPP NR/5GS

3GPP TS 38.211: Physical channels and modulation
3GPP TS 38.212: Multiplexing and channel coding
3GPP TS 38.213: Physical layer procedures for control
3GPP TS 38.214: Physical layer procedures for data
3GPP TS 38.215: Physical layer measurements
3GPP TS 38.300: NR and NG-RAN Overall Description
3GPP TS 38.304: User Equipment (UE) procedures in idle mode and in RRC inactive state
3GPP TS 38.321: Medium Access Control (MAC) protocol
3GPP TS 38.322: Radio Link Control (RLC) protocol
3GPP TS 38.323: Packet Data Convergence Protocol (PDCP)
3GPP TS 38.331: Radio Resource Control (RRC) protocol
3GPP TS 37.324: Service Data Adaptation Protocol (SDAP)
3GPP TS 37.340: Multi-connectivity; Overall description
3GPP TS 23.501: System Architecture for the 5G System
3GPP TS 23.502: Procedures for the 5G System
3GPP TS 23.503: Policy and Charging Control Framework for the 5G System; Stage 2
3GPP TS 24.501: Non-Access-Stratum (NAS) protocol for 5G System (5GS); Stage 3
3GPP TS 24.502: Access to the 3GPP 5G Core Network (5GCN) via non-3GPP access networks
3GPP TS 24.526: User Equipment (UE) policies for 5G System (5GS); Stage 3

### 3GPP V2X

3GPP TS 23.285: Architecture enhancements for V2X services
3GPP TR 23.786: Evolved Packet System (EPS) and the 5G System (5GS) to support advanced V2X services
3GPP TS 23.287: Architecture enhancements for 5G System (5GS) to support Vehicle-to-Everything (V2X) services
3GPP TS 24.587: Vehicle-to-Everything (V2X) services in 5G System (5GS); Protocol aspects; Stage 3
3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

**Overview of 3GPP System**

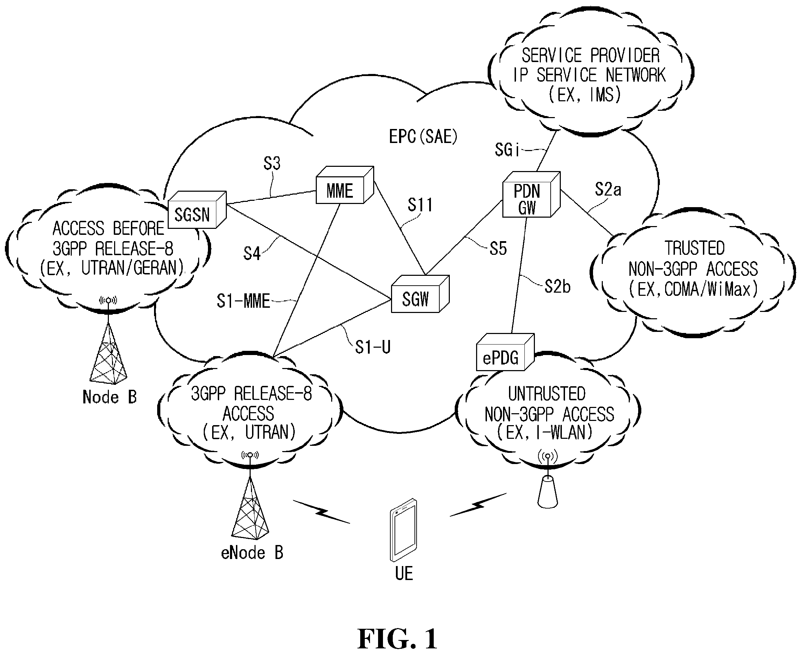

FIG. 1 illustrates various reference points.

An example of the network structure of FIG. 1 discloses an LTE/EPS-based network structure, and may operate with reference to matters described in standard documents published before this document. In the network structure of FIG. 1, at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

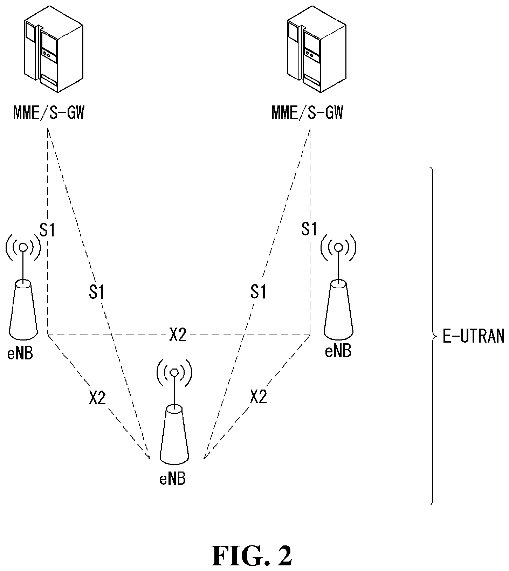

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

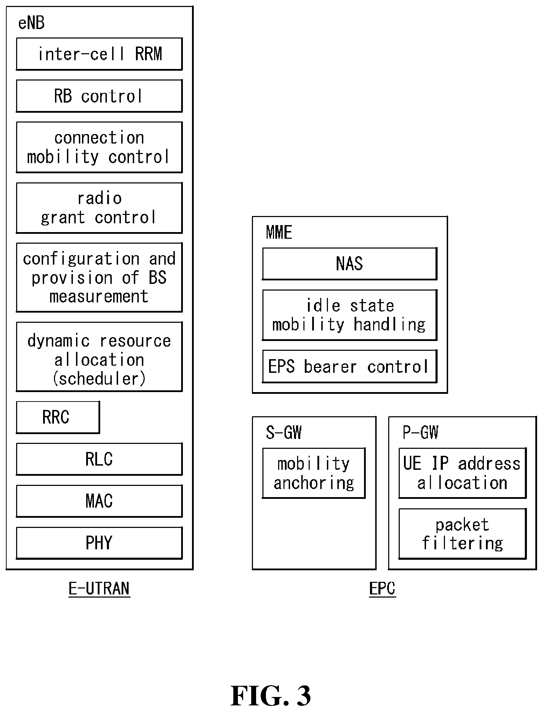

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

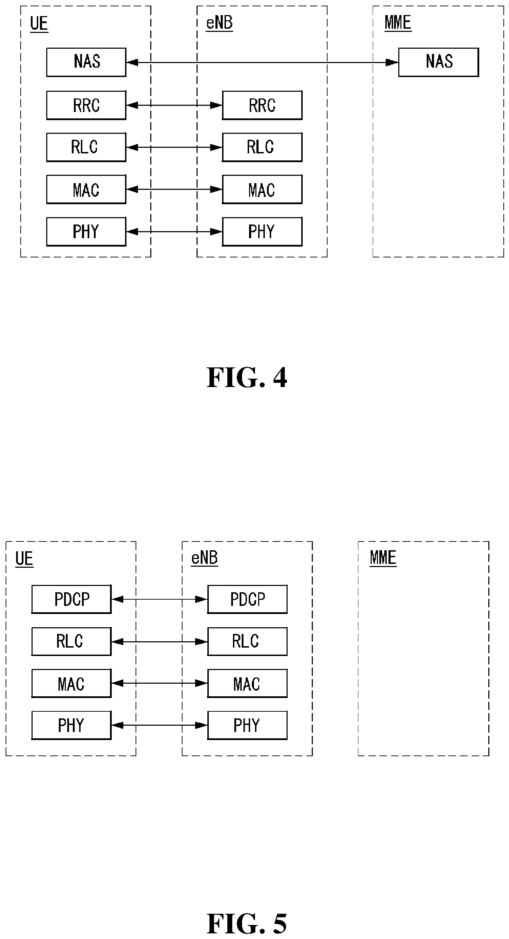

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

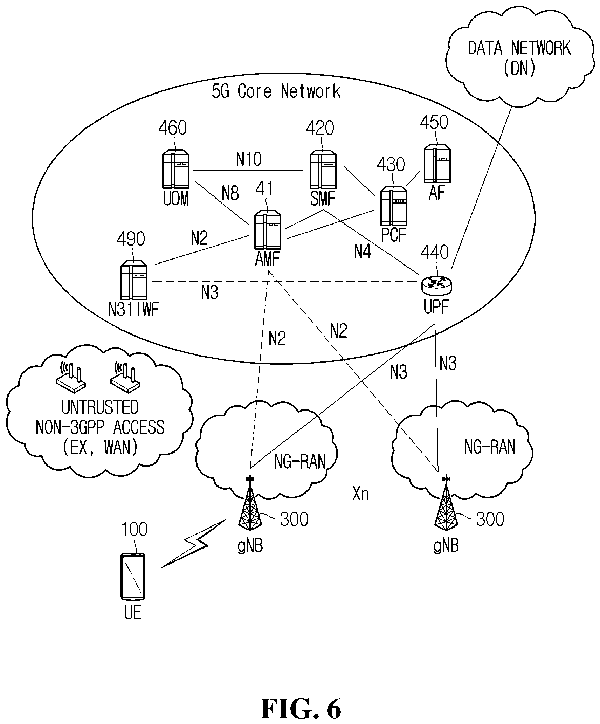

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

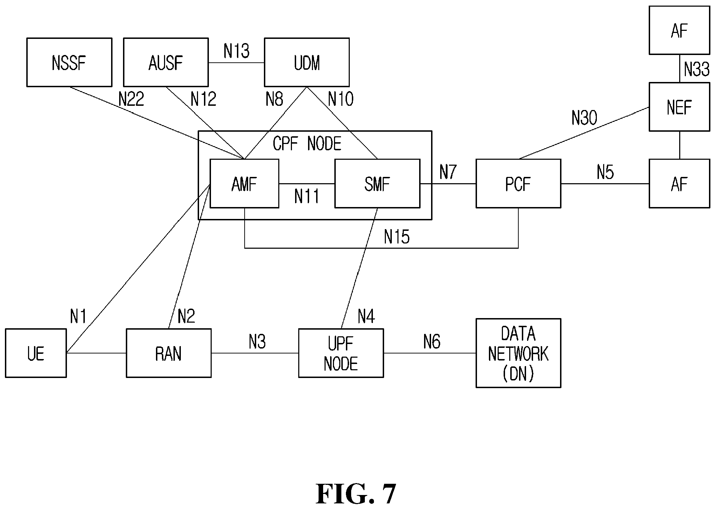

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

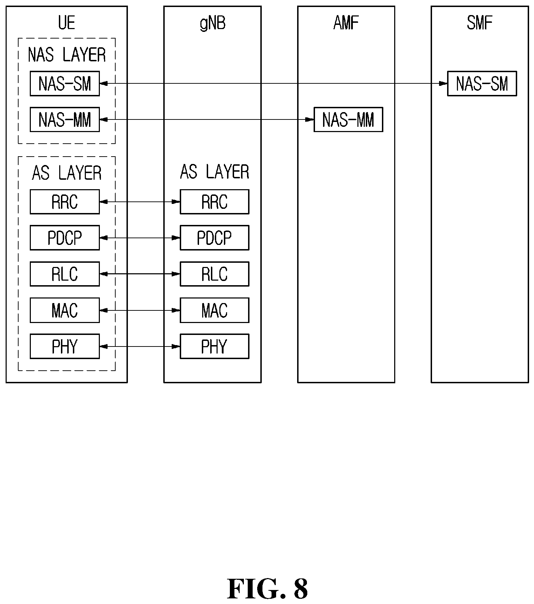

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

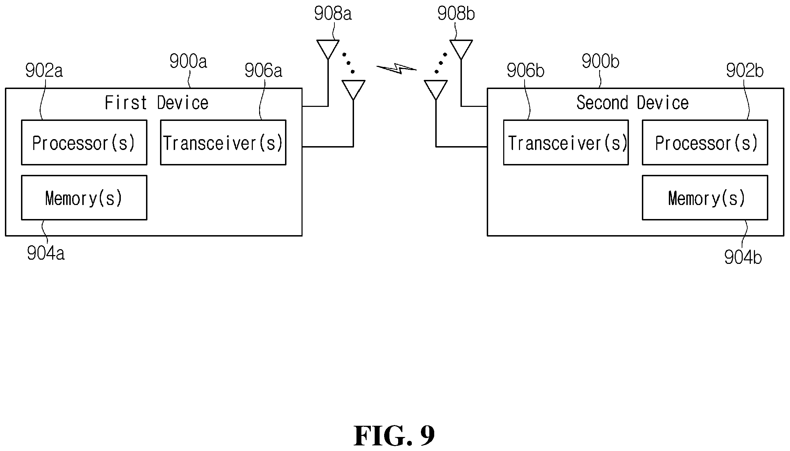

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

As an example, ProSe direct discovery, as a function supported based on ProSe service, may be a process in which a terminal (UE) discovers and recognizes other nearby terminals based on NR, E-UTRA, or WLAN. At this time, ProSe direct discovery may include two types of methods: open and restricted. As an example, the open method may be a method in which direct discovery is performed without explicit permission for a terminal being discovered. On the other hand, the restricted method may be a method in which direct discovery is performed only when there is explicit permission for the terminal to be discovered.

As an example, ProSe direct discovery may be a service provided solely to use information on a specific application of the terminal being discovered. The terminal may perform additional operations through information obtained based on ProSe direct discovery, and services may be provided through this.

As an example, ProSe direct discovery may operate based on Model A or Model B, but may not be limited thereto. As an example, in Model A, a terminal with the ProSe function enabled may perform at least one of the roles of an announcing terminal or a monitoring terminal. As an example, the announcing terminal may be a terminal that announces specific information available in another nearby terminal that is permitted to be discovered. The monitoring terminal may be a terminal that monitors specific information announced by the announcing terminal. Here, the announcing terminal broadcasts a discovery message during a preset discovery period, and the monitoring terminal may operate by checking messages of interest among the broadcast messages and proceeding with the subsequent process. In other words, Model A may be a model in which the announcing terminal voluntarily transmits its presence and related information to surrounding terminals through broadcast, and a discovery is performed when a nearby monitoring terminal is interested in the information.

On the other hand, Model B is of a restricted discovery type and may be a model in which ProSe direct discovery is performed by a discoverer UE sending a restricted discovery message to a discoveree UE. More specifically, the discoverer UE may transmit a request containing specific information to be discovered to the discoveree UE. At this time, the discoveree UE may send a response message containing related information to the discoverer UE based on the request message received from the discoverer UE. That is, in Model B, the discoverer UE transmits a discovery request message for specific information to a specific discoveree UE, and receives a response, thereby performing ProSe direct discovery.

Direct communication may be performed based on the above. In addition, as an example, the core network of a new communication system (e.g., 5G) may support at least one of ProSe direct discovery, ProSe direct communication, or ProSe UE-to-network relay. At this time, terminals operating based on the ProSe function may perform authentication. Additionally, as an example, pre-provisioning for ProSe direct discovery, ProSe direct communication, and ProSe UE-to-network relay may be performed on terminals operating based on the ProSe function, through which the above-described services may be provided.

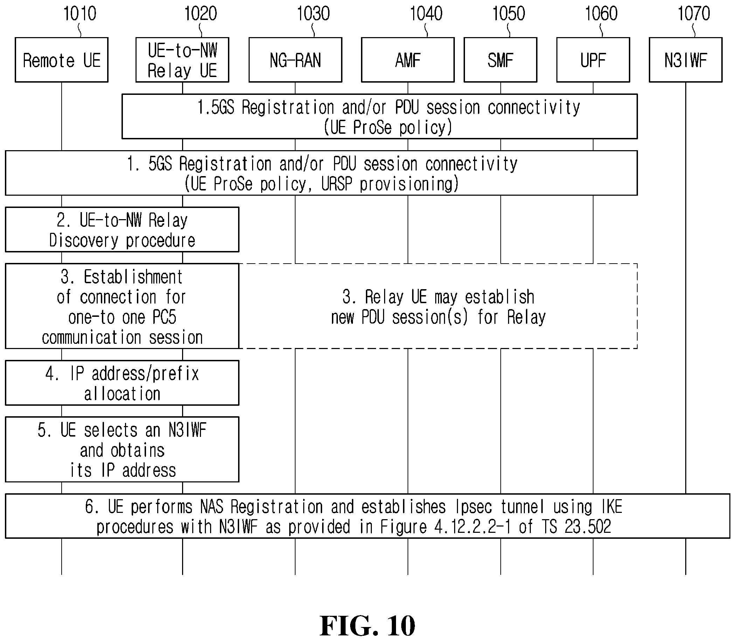

FIG. 10 is a diagram showing a method of performing ProSe communication based on a UE-to-network relay applied to the present disclosure. Referring to FIG. 10, a relay terminal (UE) 1020 may register in a network. The relay UE 1020 may be a layer-3 UE-to-network relay, but is referred to as the relay UE 1020 for convenience of explanation below. However, the relay UE 1020 may not be limited to a layer-3 UE-to-network relay.

After registering in the network, the relay UE 1020 may establish a PDU session to provide a relay to a remote terminal (UE) 1010 or change a current PDU session to provide a relay. The relay UE 1020 may use the PDU session for relay traffic to the remote UE 1010.

More specifically, referring to FIG. 10, service authentication and provisioning for the relay UE 1020 may be performed. Additionally, as an example, service authentication and provisioning for the remote UE 1010 may also be performed. At this time, the relay UE 1020 may establish or change a PDU session for relay. Thereafter, the remote UE 1010 may perform a discovery procedure for the relay UE 1020. At this time, the remote UE 1010 may recognize services that may be accessed based on the relay UE 1020 through a discovery procedure. As an example, the remote UE 1010 may discover the relay UE 1020 that provides services for relay service code (RSC) value set for connection to 5GC through the relay UE 1020 and an N3IWF. Thereafter, the remote UE 1010 and the relay UE 1020 may establish a connection for unicast mode communication. If there is no PDU session associated with the relay service code or a new PDU session for relay is needed, the relay UE 1020 may start a new PDU session establishment procedure before completing PC5 connection establishment. Additionally, the relay UE 1020 may determine a PDU session type for relay. At this time, based on the PDU session type for the relay, the relay UE 1020 may perform the relay function in the corresponding layer. Thereafter, an IP address and prefix may be allocated to the remote UE 1010. The relay UE 1020, which provides a connection to 5GC through the N3IWF, and the remote UE 1010, which has established a unicast connection, may select the N3IWF and determine the IP address of the N3IWF. The remote UE 1010 uses the N3IWF and an IKE procedure to establish an IPsec tunnel for signaling. Then, registration is performed with 5GC. Thereafter, the remote UE 1010 may perform 5GC and NAS procedures through the established IPsec tunnel. As an example, the remote UE 1010 may perform a PDU session establishment procedure.

Here, as an example, a relay UE 1020 that provides a relay to the remote UE 1010 through the N3IWF (Non-3GPP Interworking Function) and a relay UE 1020 that provides a relay to the remote UE 1010 without the N3IWF may exist. As an example, the N3IWF may be located in the RAN to accommodate non-3GPP access, and the N3IWF may support an interface between the UE and the core network. In other words, the N3IWF may be a network function to accommodate non-3GPP access. Here, in the case of the relay UE 1020 providing a relay to the remote UE 1010 through the N3IWF, the relay UE 1020 may advertise a tracking area identity (TAI) corresponding to a serving cell of the relay UE 1020 to help the remote UE 1010 select the N3IWF. Here, the TAI may be advertised through a PC5 discovery message as a relay discovery additional information message, that is, using the PC5-D protocol stack. However, there is a need to define the operation in which the relay discovery additional information message including the TAI described above is transmitted. Specifically, operations may be required regarding the timing and conditions at which the relay discovery additional information message including the TAI is transmitted, which will be described later.

As an example, in order to relay traffic of the remote UE 1010 through the N3IWF, the relay UE 1020 may establish a PDU session based on a ProSe policy that allows N3IWF access. Here, the PDU session for transferring traffic through the N3WIF may exist together with a separate PDU session of the relay UE, and is not limited to the above-described embodiment. That is, a PDU session may be established so that traffic of the remote UE 1010 is relayed through the N3IWF, and is not limited to a specific embodiment.

The remote UE 1010 may select an N3IWF to transfer traffic of the remote UE 1010 through the N3IWF selection procedure. As an example, the remote UE 1010 may be configured by the HPLMN using the N3IWF identifier configuration for the remote UE's relay to support N3IWF selection. When the remote UE 1010 decides to select the N3IWF in the HPLMN, the remote UE 1010 may use the N3IWF identifier configuration described above.

As an example, when supporting the remote UE 1010 based on N3IWF selection, the relay UE 1020 supporting N3IWF access may advertise a 5GS TAI corresponding to the serving cell, which will be described later. When the remote UE 1010 is supported based on N3IWF selection, the remote UE 1010 may select the N3IWF and obtain the corresponding IP address. Thereafter, the remote UE 1010 may perform NAS registration, connect to the N3IWF, and perform communication through the relay UE 1020. That is, the remote UE 1010 may be registered in the network through the relay UE 1020 with N3IWF support.

As an example, a relay service code may be included in an announcement message for layer-3 UE-to-Network relay. Here, the relay service code may be associated with the parameters of the PDU session. As an example, the parameters of the PDU session include PDU session type, data network name (DNN), session and service continuity (SSC) mode, network slice selection assistance information (S-NSSAI), access type preference, and other information and is not limited to a specific embodiment. Additionally, as an example, when the relay UE provides a secure N3IWF connection, the relay service code may indicate the above-described information.

As a more specific example, when the remote UE discovers a relay UE, the relay service code included in a solicitation message may indicate the parameters of the PDU session that must be supported for relay. Additionally, when the relay UE provides a secure N3IWF connection, the relay service code may indicate the above-described information, which is as described above.

Additionally, as an example, an announcer UE for layer-3 UE-to-network relay may additionally transmit a relay discovery additional information message. Here, the relay discovery additional information message may include at least one of relay service code, announcer information, NR Cell Global Identifier (NCGI), or tracking area identifier (TAI) information as shown in Table 1 below, but is not limited to this. Here, the above-mentioned relay discovery additional information message may include TAI as identifier information of the tracking area of the relay UE, as shown in Table 1 below. As an example, the tracking area may include one or more adjacent cells, and a TAI for identifying the tracking area of the terminal may be determined based on the terminal location. Here, when the remote UE is provided with a relay through the N3IWF, the remote UE may need TAI information of the relay UE to select the N3IWF, and TAI information may be included in the relay discovery additional information message. However, the TAI may not always be included in the relay discovery additional information message, and a case where the relay discovery additional information message includes the TAI will be described below.

**[Table 1]**

| |
|---|
| - Relay Service Code: the Relay Service Code associated with the message. The Relay Service Code is used to identify the security parameters needed by the receiving UE to process the discovery message. |
| - Announcer Info: provides information about the announcing user. |
| - NCGI: indicates the NCGI of the serving cell of the 5G ProSe Layer-3 UE-to-Network Relay. This parameter is used in Cell ID announcement procedure as described in clasue 6.5.1.3. |
| - TAI: indicates the Tracking Area Identity of the serving cell of the 5G ProSe Layer-3 UE-to-Network Relay. This parameter may be used by 5G ProSe Layer-3 Remote UE to select a N3IWF. |

Hereinafter, a method of providing relay-related information will be described based on the above. As an example, the method provided below may be based on at least one of the following combinations of operations, configurations, and steps.

As an example, the following may be an operation of a User Equipment (UE) or a terminal, and is referred to as a terminal for convenience of explanation, but may not be limited thereto. Also, UE-to-Network Relay, ProSe UE-to-Network Relay, Relay, Relay UE, UE-NW Relay, 5G ProSe UE-to-Network Relay, 5G ProSe UE-to-NW Relay, 5G ProSe UE-to-Network Relay UE may be used interchangeably and are referred to as a relay UE for convenience of explanation, but may not be limited thereto. Additionally, Remote UE, 5G Remote UE, 5G ProSe Remote UE, etc. may be used interchangeably and are referred to as a remote UE for convenience of explanation, but may not be limited thereto.

In addition, in the following, Direct Discovery, ProSe Discovery, 5G ProSe Direct Discovery, PC5 Discovery, etc. are used interchangeably and are referred to as discovery for convenience of explanation, but may not be limited thereto. In addition, Direct Communication, ProSe Communication, ProSe Direct Communication, 5G ProSe Direct Communication, and PC5 Communication are used interchangeably, and are referred to as direct communication for convenience of explanation, but may not be limited thereto. Additionally, as an example, TS 23.304 may be basically referred to below for ProSe-related operations and procedures, but may not be limited thereto.

When supporting the remote UE based on N3IWF selection, a relay UE supporting N3IWF access may advertise the TAI corresponding to a serving cell, as described above. Here, the relay UE may advertise the TAI through a TAI announcement procedure, additional parameter announcement procedure, and other procedures, and is not limited to a specific form.

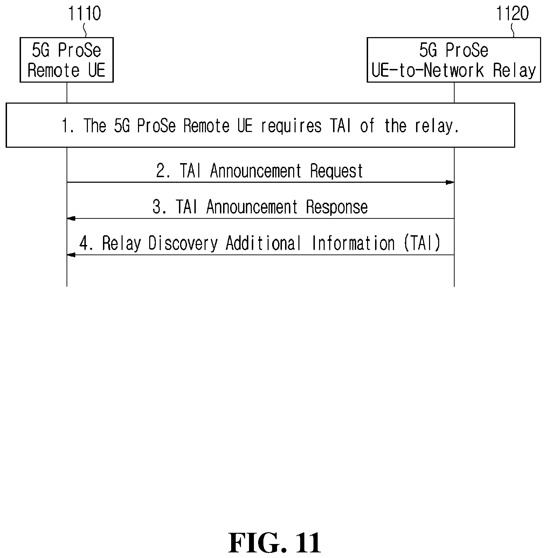

As a specific example, FIG. 11 is a diagram showing a method of advertising a TAI through a TAI announcement procedure applicable to the present disclosure. Referring to FIG. 11, when a remote UE 1110 selects a N3IWF, the remote UE 1110 may need TAI information for a serving cell of a relay UE 1120. Accordingly, the remote UE 1110 may request a TAI for the serving cell of the relay UE from the relay UE 1120 for the relay service. The remote UE 1110 may select an N3IWF through the announced TAI to communicate with 5GC. As another example, the remote UE 1110 may need TAI information of the relay UE 1120 to select a new N3IWF when the connection with the existing N3IWF fails or disconnection occurs, and is not limited to a specific embodiment. At this time, the remote UE 1110 may transmit a TAI announcement request message to the relay UE 1120. That is, the remote UE 1110 may request a TAI for the serving cell of the relay UE from the relay UE 1120. When the relay UE 1120 receives the TAI announcement request, the relay UE 1120 may transmit a TAI announcement response to the remote UE 1110 as an acknowledgment response. That is, the relay UE 1120 may transmit a response to reception of the request message to the remote UE 1110. Thereafter, the relay UE 1120 may transmit a relay discovery additional information message including the TAI to the remote UE 1110. As an example, the relay discovery additional information message may be transmitted in broadcast form. As a specific example, it may be transmitted in broadcast form based on a default destination layer-2 ID set to be used when transmitting a PC5 discovery message.

As another example, the relay discovery additional information message may be transmitted in unicast form to the above-described remote UE 1110 as a destination. As a specific example, the layer-2 ID of the remote UE 1110 may be set as a destination Layer-2 ID and transmitted.

Here, as an example, the relay UE 1120 may transmit TAI information one time based on a request from the remote UE 1110, and the relay UE 1120 may transmit TAI information to the remote UE 1110 even if the TAI information is changed. At this time, the relay UE 1120 basically transmitting TAI information one time based on the request from the remote UE 1110 may be determined based on at least one of local configuration, policy, UE implementation, relay status (e.g., battery remaining amount, etc.), PC5 congestion, or PC5 CBR (Channel busy ratio), and may not be limited to a specific embodiment.

As another example, the relay UE 1120 may transmit a relay discovery additional information message one or more times. For example, when a remote UE other than the remote UE 1110 described above is connected to the relay UE 1120, a relay discovery additional information message may be transmitted one or more times. More specifically, if a remote UE other than the above-described remote UE 1110 is connected to the relay UE 1120 and has not yet requested a TAI announcement from the relay UE 1120, the relay UE 1120 may transmit relay discovery additional information message one or more times. As an example, the relay UE 1120 has not received a TAI announce request from one or more remote UEs 1110 other than the remote UE 1110, but the relay UE 1120 may transmit the relay discovery additional information message multiple times. As an example, the relay UE 1120 has not received a TAI announcement request from one or more other remote UEs 1110 other than the remote UE 1110, but it may be transmission considering the other remote UEs 1110 connected to the relay UE 1120.

Here, as an example, the relay UE 1120 may transmit a relay discovery additional information message in broadcast form. Specifically, the relay UE 1120 may perform transmission using the default destination layer-2 ID set to be used when transmitting the PC5 discovery message as the destination identifier, but is not limited to this. Through this, the relay UE 1120 may transmit the relay discovery additional information message one or more times in consideration of one or more other remote UEs connected to the relay UE 1120. This is because at the time when the relay UE 1120 receives a TAI announcement request from the remote UE 1110 and first transmits the TAI information in broadcast form, other remote UEs may not be ready to or may have no intention to receive relay discovery additional information that includes TAI information. As an example, at the time described above, other remote UEs may not yet be ready to receive the relay discovery additional information message including TAI information because the unicast connection establishment procedure with the relay UE 1120 is completing.

As another example, the relay UE 1120 may transmit the relay discovery additional information message in unicast form to one or more other remote UEs connected to the relay UE 1120 as a destination. Through this, the relay discovery additional information message including TAI information may be transmitted to the remote UEs that are connected to the relay UE 1120 but have not requested TAI information announcement.

As described above, when the relay UE 1120 transmits the relay discovery additional information message one or more times, the other remote UEs may also receive the TAI information of the relay UE without a separate request. At this time, the other remote UEs that do not request TAI information may identify the relay UE which has transmitted the relay discovery additional information message based on at least one of relay service code, announcer info, or source Layer-2 ID of the relay discovery additional message (i.e., Layer-2 ID used for the relay UE to use the relay discovery additional message). That is, the other remote UEs may determine whether the relay UE that has transmitted the relay discovery additional information message is the relay UE selected thereby based on the above-described information. Here, as an example, the number of other remote UEs that did not request TAI information may be one or more, and is not limited to a specific embodiment.

As another example, when the relay UE transmits the relay discovery additional information message one or more times, at least one of the number of repeated transmissions or the repetition period of the relay discovery additional information message may be set in the relay UE.

Here, the relay UE may decide to always transmit the relay discovery additional information message when one or more other remote UEs exist. As another example, when there is a setting value such as the above-described number of repeated transmission and repetition period, the relay UE may determine the relay discovery additional information message transmission based on the setting value for the relay discovery additional information message based on at least one of local configuration, policy, network indication information, or implementation, and is not limited to a specific embodiment.

As described above, the relay UE has established a unicast connection (i.e., L2 link) with the remote UE, and if there is a remote UE that has not yet requested TAI information, the relay discovery information message may be transmitted one or more times. (hereinafter, Case a) As another example, the relay UE may transmit a relay discovery information message one or more times if there is a remote UE with which a unicast connection is being established. (hereinafter, Case b) As another example, the relay UE may transmit a relay discovery information message one or more times when responding to a remote UE discovering the relay UE. (hereinafter, Case c). As another example, if there is another remote UE that is serving the relay UE in addition to the remote UE that requested TAI information, the relay discovery information message may be transmitted one or more times (hereinafter, Case d).

In the above-described cases, the relay UE may transmit the relay discovery information message one or more times based on the relay UE decision. As an example, if the relay UE decides to provide TAI information to one or more other remote UEs that did not request TAI information in addition to the remote UE that requested TAI information, the relay UE may transmit a discovery information message including TAI information one or more times.

As another example, the relay UE may transmit a message including TAI information one or more times even if there is no request for TAI information from the remote UE. As a specific example, the relay UE may establish a unicast connection with remote UE #1 and then transmit a message including TAI information without requesting TAI information from remote UE #1. Here, the relay UE may transmit a message including TAI information based on at least one of the Cases a to d described above.

As another example, if the relay UE decides to provide TAI information to remote UEs other than remote UE #1, the relay UE may transmit a message including TAI information one or more times. Based on the above, one or more remote UEs other than remote UE #1 may also obtain TAI information.

In FIG. 11, the description is based on using the PC5-S message of TAI announcement request/response to request TAI information, but may not be limited thereto. That is, another PC5-S message may be used to request TAI information. As another example, a PC5 discovery message may be used to request TAI information, and is not limited to a specific embodiment. Additionally, in FIG. 11, the relay UE may include TAI information in a response (or ACK) message to a request message requesting TAI information and transmit it to the remote UE. Here, if the relay UE decides to transmit a message including TAI information one or more times, the relay UE may transmit a response (or ACK) message one or more times. As another example, if the relay UE decides to transmit a message including TAI information one or more times, the relay UE transmits a response (or ACK) message one time, and then may additionally transmit a message including TAI information one or more times. Here, at least one of a response (or ACK) message or a message including TAI information may be transmitted to the remote UE that requested TAI information as a destination. As a specific example, a message may be transmitted by setting the Layer-2 ID of the remote UE as a destination Layer-2 ID. As another example, at least one of the response (or ACK) message or the message including TAI information may be transmitted in broadcast form. As a specific example, it may be transmitted in broadcast form based on a default destination layer-2 ID set to be used when transmitting the PC5 discovery message.

As an example, the description is based on a Layer-3 remote UE that receives a connection service based on a Layer-3 UE-to-Network Relay with N3IWF support, but the method described above may not be limited thereto. That is, the above-described method may be equally applied to Layer-2 UE-to-Network Relay and Layer-2 Remote UE. As another example, it may be equally applied to a Layer-3 UE-to-Network Relay without N3IWF support and a Layer-3 remote UE that receives a network connection service through such a relay UE and may not be limited to a specific embodiment.

As another example, when a remote UE requests TAI information from a relay UE, the relay UE may periodically and repeatedly transmit a message including TAI information. In addition, when the TAI is changed, the relay UE may transmit a message including TAI information one or more times (i.e. additionally) to one or more other remote UEs based on the method of transmitting the changed TAI, but is not limited to thereto. Here, as an example, when a message including TAI information is additionally transmitted for other remote UEs, the message including TAI information may be additionally transmitted to the other remote UEs at a shorter/smaller period than the repeated transmission period of the message including TAI information. That is, after transmitting the message including TAI information for the first time, the message including TAI information may be additionally transmitted for other remote UEs before performing the next transmission, and is not limited to the above-described embodiment.

As another example, when the remote UE requests TAI announcement from the relay UE, the remote UE may request to announce TAI information only one time. Accordingly, the relay UE may basically announce TAI information one time. However, as described above, the relay UE may additionally announce TAI information in consideration of the presence of one or more other remote UEs, and is not limited to a specific embodiment.

As another example, when the remote UE requests a TAI announcement from the relay UE, the relay UE may periodically and repeatedly transmit a message including TAI information. Additionally, when TAI information is changed, the relay UE transmits the changed TAI information. However, as described above, the relay UE may transmit a message including TAI information multiple times (i.e., additionally) in consideration of the presence of one or more other remote UEs. In this case, the message including TAI information may be additionally transmitted for other remote UE(s) at a shorter/smaller period than the repeated transmission period, i.e., after transmitting the message including TAI information for the first time, before performing the next transmission.

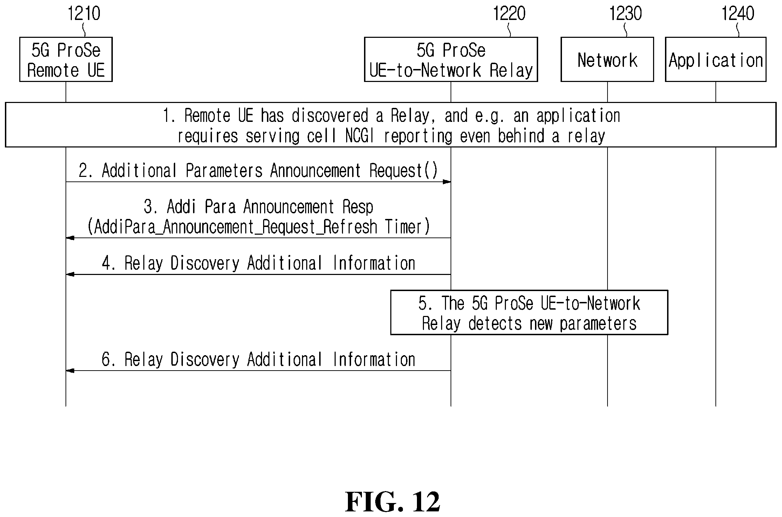

FIG. 12 is a diagram showing a method of performing an additional parameters announcement procedure applicable to the present disclosure.

Referring to FIG. 12, a remote UE (5G ProSe remote UE) 1210 may obtain additional parameter information from a relay UE (5G ProSe UE-to network relay) 1220 through an additional parameters announcement procedure. Specifically, the remote UE 1210 may use the additional parameters announcement procedure to request announcement of additional parameters from the relay UE 1220. As an example, the remote UE 1210 may request the relay UE to announce at least one of a NR cell global ID (NCGI) for a serving cell of the relay UE or a TAI for the serving cell of the relay UE through the additional parameters announcement procedure.

As a more specific example, referring to FIG. 12, the remote UE 1210 may discover the relay UE 1220. Here, the remote UE 1210 may request the discovered relay UE 1220 to announce the NCGI for the serving cell of the relay UE. As another example, the remote UE 1210 may need TAI information for the serving cell of the relay UE for N3IWF selection, and may request the relay UE 1220 to announce the TAI for this.

The remote UE 1210 may transmit an additional parameter announcement request to the relay UE 1220 to obtain additional parameters. That is, the remote UE 1210 may transmit a request message to the relay UE 1220 to announce at least one of the NCGI for the serving cell of the relay UE and the TAI for the serving cell of the relay UE. At this time, as an example, the additional parameter announcement request message may include indication information requesting that announcement be performed only one time for the TAI. That is, the additional parameter announcement request message may include one-time announcement request indication information. As another example, the additional parameter announcement request message may include indication information requesting that announcement be performed only one time not only for the TAI but also for other additional parameters (e.g., NCGI). That is, the additional parameter announcement request message may also include one-time announcement request indication information for other additional parameters (e.g., NCGI). Here, the one-time announcement request indication information may be explicitly indicated through the additional parameter announcement request message. As a specific example, a field or bit for indicating a one-time announcement request may be included, but may not be limited thereto.

Alternatively, the one-time announcement request indication information may be implicitly indicated through the additional parameter announcement request message. That is, the one-time announcement request may be implicitly indicated through settings or information in the additional parameter announcement request message without separate bits or fields, but may not be limited thereto.

As another example, the additional parameter announcement request message may include indication information for each of the requested parameters. That is, one-time announcement request indication information may be included for each additional parameter. Through this, it be indicated whether announcement will be performed only one time for each additional parameter. As another example, the additional parameter announcement request message may include one one-time announcement request indication information indicating that announcement is performed only one time for all requested parameters. That is, whether all additional parameters will be announced only one time may be indicated together.

Thereafter, the relay UE 1220 may transmit an additional parameters announcement response to the remote UE 1210 as an acknowledgment (ACK) response. Here, the additional parameter announcement response may include an additional parameters announcement request refresh timer. The additional parameters announcement request refresh timer may be configured in the relay UE 1220, and the additional parameters announcement request refresh timer may be provided to the remote UE 1210 through the additional parameter announcement response. Here, if necessary additional parameters exist, the remote UE 1210 may obtain the additional parameters by transmitting an additional parameter announcement request message until the additional parameters announcement request refresh timer expires.

Here, when the remote UE 1210 does not start a new additional parameter announcement request procedure until the additional parameters announcement request refresh timer expires, and other UEs also does not perform the additional parameter announcement request until the additional parameters announcement request refresh timer expires in the relay UE 1220, the relay UE 1220 may stop announcing the additional parameters.

As an example, the case where the remote UE 1210 requests TAI information from the relay UE 1220 and indicates that the announcement is performed only one time through the one-time announcement request indication information described above may be considered. The relay UE 1220 may not include the additional parameters announcement request refresh timer in an additional parameter announcement response message. In other words, since it is indicated that announcement is performed only one time in the relay UE, the timer for announcing may be unnecessary, and accordingly, the additional parameters announcement request refresh timer may not be included in the additional parameter announcement response message.

In addition, as an example, the case where the remote UE 1210 includes one-time announcement request indication information indicating whether to perform announcement only one time not only for TAI information but also for other additional parameters (e.g., NCGI) in an additional parameter announcement request may be considered. Here, when it is indicated that announcement is performed only one time for all requested parameters, the relay UE 1220 may not include the additional parameters announcement request refresh timer in the additional parameter announcement response message. In other words, if one-time announcement request indication information for other additional parameters is included, the additional parameters announcement request refresh timer may not be included in the additional parameter announcement response message only when it is indicated that announcement is performed only one time for all parameters.

After the relay UE 1220 transmits the additional parameter announcement response to the remote UE 1210 as an acknowledgment response, the relay UE 1220 may announce additional parameters through a relay discovery additional information message. Announcing may be repeated based on a certain period while the additional parameters announcement request refresh timer operates in the relay UE. Here, the certain period may be shorter than the additional parameters announcement request refresh timer described above. That is, the certain period may be set to be more frequent than the additional parameters announcement request refresh timer described above.

Based on the above, the relay UE 1220 may announce at least one of the NCGI of the serving cell of the relay UE or the TAI of the serving cell of the relay UE. The remote UE 1210 may obtain additional parameter information announced by the relay UE 1220. Here, as an example, when the remote UE 1210 requests one-time announcement request indication information indicating that announcement is performed one time for TAI information from the relay UE 1220, the relay UE may announce the TAI information only one time and may not perform subsequent procedures. In addition, as an example, the remote UE 1210 requests one-time announcement request indication information indicating that announcement is performed one time not only for TAI information but also for other additional parameters (e.g., NCGI) from the relay UE 1220, the relay UE may perform announcement one time for all parameters for which one announcement was requested, and may not perform subsequent procedures.

Here, as an example, even if the remote UE 1210 transmits one-time announcement request indication information indicating that announcement is performed one time for TAI information to the relay UE 1220, the relay UE 1220 may announce relay discovery additional information including TAI information one or more times. More specifically, when there are one or more other remote UEs connected to the relay UE 1220, and one or more other remote UEs have not yet requested an announcement from the relay UE 1220, the remote UE 1210 may announce relay discovery additional information including TAI information one or more times even if the remote UE 1210 transmits indication information indicating that announcement is performed one time for TAI information to the relay UE 1220. Through this, one or more other remote UEs may obtain TAI information without requesting TAI information from the relay UE 1220.

In addition, as an example, the remote UE 1210 includes, in an additional parameter announcement request, one-time announcement request indication information indicating a request for one-time announcement not only for TAI but also for other additional parameters (e.g., NCGI), the relay UE 1220 may additionally proceed with announcement for other additional parameters in consideration of the presence of one or more other remote UEs even if the remote UE requests one announcement, and is not limited to a specific embodiment.

That is, the relay UE 1220 may perform one announcement for all additional parameters for which the remote UE 1210 has requested one announcement. However, when there are one or more other remote UEs connected to the relay UE 1220, the relay UE 1220 may additionally perform announcement when it is determined that announcement is necessary for one or more other remote UEs even if there is no request for announcement from one or more other remote UEs.

Next, the relay UE 1220 may discover new additional parameters. As a specific example, the relay UE 1220 may recognize a new NCGI of a new serving cell based on camping to the new serving cell or may recognize a new TAI based on movement of the relay UE 1220. At this time, the relay UE 1220 may discover new additional parameters. When the additional parameters are newly discovered, the relay UE may immediately announce the new additional parameters through a relay discovery additional information message. As another example, the relay UE 1220 may announce additional parameters based on a preset period as described above. Here, the relay UE 1220 may announce the additional parameters until no UE requests announcement of the additional parameters (that is, until the additional parameters announcement request refresh timer expires).

As an example, as described above, the operation of transmitting a message including TAI information multiple times may include an operation in which TAI information is additionally included and transmitted in addition to the initial transmission of the above-described message. As a specific example, when the relay UE transmits a message transmitting relay-related information including information other than TAI information (e.g., NCGI information), an operation in which TAI information is additionally included and transmitted after the initial transmission of the above-described message may also be included and is not limited to specific examples.

Also, as an example, the relay UE 1220's decision to transmit TAI information to one or more other remote UEs other than the remote UE that requested TAI information may be the decision of the relay UE 1220 considering that one or more other remote UEs may also need or request TAI information, and is not limited to a specific embodiment. Additionally, the relay-related information provided by the relay UE 20 may be TAI information, but may include other information in addition to TAI information, and may not be limited to a specific embodiment. Through the above, a remote UE that needs the TAI information of the relay UE may obtain a message including the TAI information without a request, thereby saving PC5 resources and time required for the request.

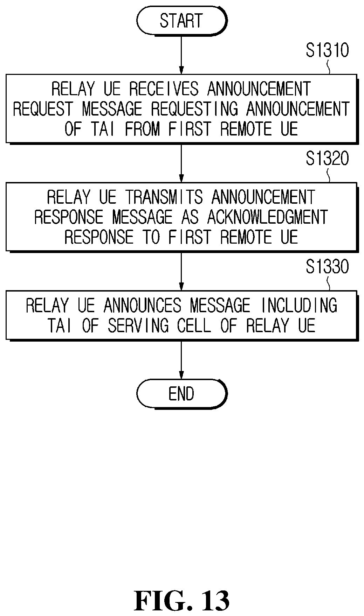

FIG. 13 is a diagram showing a method of, at a relay UE applicable to the present disclosure, providing TAI information of a serving cell. The relay UE may receive an announcement request message requesting announcement of a Tracking Area Identity (TAI) from a first remote UE. (S1310) Here, in the above-described operation, the request for the TAI of the service cell from the relay UE may be made based on an additional parameters announcement procedure. As an example, the announcement request message requesting announcement of TAI may be an additional parameter announcement request message.

Thereafter, the relay UE may transmit an announcement response message as an acknowledgment response to the first remote UE (S1320). Here, the announcement response message may be an additional parameter announcement response. Next, the relay UE may transmit a message including the TAI of the serving cell of the relay UE (S1330). At this time, the message including the TAI of the serving cell of the relay UE may a relay discovery additional information message.

As an example, when one or more remote UEs other than the first remote UE are connected to the relay UE, the relay UE may transmit the message including the TAI of the serving cell of the relay UE one or more times. Through this, one or more UEs other than the first remote UE may obtain TAI information without a TAI announcement request, thereby saving resources and time.

Alternatively, when one or more remote UEs other than the first remote UE are connected to the relay UE, and the connected one or more remote UEs other than the first remote UE do not transmit a message requesting announcement of TAI, the message including the TAI of the serving cell of the relay UE may be transmitted one or more times. That is, the relay UE may transmit the message including the TAI of the serving cell of the relay UE one or more times if there is another remote UE that has not requested TAI announcement. Here, as an example, the relay UE may transmit the message including the TAI of the serving cell of the relay UE one or more times based on implementation of the relay UE.

Additionally, the relay UE may repeatedly transmit a relay discovery additional information message based on a preset period while an additional parameters announcement request refresh timer operates in the relay UE. That is, the relay discovery additional information message may be repeatedly transmitted according to a preset period based on a timer configured in the relay UE.

Additionally, when the relay UE detects a new additional parameter or an update of the additional parameter, the relay UE may transmit the new additional parameter or the updated additional parameter through a relay discovery additional information message.

As another example, based on the additional parameter announcement request message, the first remote UE may request announcement of an additional parameter from the relay UE. Here, the additional parameter may include at least one of the TAI of the serving cell of the relay UE or a NR Cell Global Identifier (NCGI) of the serving cell of the relay UE. Here, the relay UE may receive, from the first remote UE, an additional parameter announcement request message including one-time announcement indication information indicating that the relay UE announces the additional parameter only one time. At this time, the relay UE may announce the additional parameter only one time based on the one-time announcement indication information. However, even if the one-time announcement indication information indicates that the additional parameter is announced only one time, when one or more remote UEs other than the first remote UE are connected to the relay UE, the relay UE may transmit the additional parameter one or more times. That is, the relay UE may transmit the additional parameter one or more times if necessary in consideration of one or more other remote UEs, and is not limited to a specific embodiment. Additionally, the one-time announcement indication information may be set in the TAI of the serving cell of the relay UE and the NCGI of the serving cell of the relay UE, respectively, or may be set as one, as described above.

As another example, the relay UE may perform relay of the first remote UE through a non-3GPP interworking function (N3IWF). Considering the above, the first remote UE may select the N3IWF based on the TAI of the serving cell of the relay UE. In addition, as an example of the present disclosure, a message including the TAI of the serving cell of the relay UE based on the announcement request message may be transmitted in a broadcast manner based on a default destination layer-2 ID set to be used when transmitting a PC5 discovery message, as described above.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a terminal in a wireless communication system, the method comprising:
receiving, by a relay terminal, an announcement request message requesting announcement of a tracking area identity (TAI) from a first remote terminal;
transmitting, by the relay terminal, an announcement response message as an acknowledgment response to the first remote terminal; and
announcing a message including a TAI of a serving cell of the relay terminal based on the announcement request message,
wherein, based on one or more other remote terminals other than the first remote terminal being connected to the relay terminal, the relay terminal transmits a message including the TAI of the serving cell of the relay terminal one or more times.

2. The method of claim 1, wherein, based on one or more other remote terminals other than the first remote terminal being connected to the relay terminal and the connected one or more other remote terminals other than the first remote terminal do not transmit a message requesting announcement of the TAI, a message including the TAI of the serving cell of the relay terminal is transmitted one or more times.

3. The method of claim 2, wherein the relay terminal transmits the message including the TAI of the serving cell of the relay terminal based on implementation of the relay terminal one or more times.

4. The method of claim 1,
wherein the request for the TAI of the serving cell of the relay terminal is made based on an additional parameters announcement procedure,
wherein the announcement request message requesting the announcement of the TAI is an additional parameter announcement request message,
wherein the announcement response message is an additional parameter announcement response message, and
wherein the message including the TAI of the serving cell of the relay terminal is a relay discovery additional information message.

5. The method of claim 4, wherein the relay terminal repeatedly transmits the relay discovery additional information message based on a preset period while an additional parameters announcement request refresh timer operates in the relay terminal.

6. The method of claim 5, wherein, based on the relay terminal detecting a new additional parameter or an update of an additional parameter, the relay terminal transmits the new additional parameter or the updated additional parameter through the relay discovery additional information message.

7. The method of claim 4,
wherein the first remote terminal requests announcement of an additional parameter from the relay terminal based on the additional parameter announcement request message, and
wherein the additional parameter comprises at least one of the TAI of the serving cell of the relay terminal or a NR cell global identifier (NCGI) of the serving cell of the relay terminal.

8. The method of claim 7,
wherein the relay terminal receives, from the first remote terminal, the additional parameter announcement request message including one-time announcement indication information indicating that the relay terminal announces the additional parameter only one time, and
wherein the relay terminal announces the additional parameter only one time based on the one-time announcement indication information.

9. The method of claim 8, wherein, even if the one-time announcement indication information indicates that the additional parameter is announced only one time, the relay terminal transmits the additional parameter one or more times based on one or more other remote terminals other than the first remote terminal being connected to the relay terminal.

10. The method of claim 8, wherein the one-time announcement indication information is set in the TAI of the serving cell of the relay terminal and the NCGI of the serving cell of the relay terminal, respectively.

11. The method of claim 1,
wherein the relay terminal performs relay of the first remote terminal through a non-3GPP interworking function (N3IWF), and
wherein the first remote terminal selects the N3IWF based on the TAI of the serving cell of the relay terminal.

12. The method of claim 1, wherein, based on the announcement request message, the message including the TAI of the serving cell of the relay terminal is transmitted in broadcast form based on a default destination layer-2 ID set to be used when transmitting a PC5 discovery message.

13. A relay terminal operating in a wireless communication system comprising:
at least one transceiver;
at least one processor; and
at least one memory operatively connected to the at least one processor and configured to store instructions that, when executed, cause the at least one processor to perform a specific operation,
wherein the specific operation comprises:
controlling the at least one transceiver to receive an announcement request message requesting announcement of a tracking area identity (TAI) from a first remote terminal;
controlling the at least one transceiver such that the relay terminal transmits an announcement response message as an acknowledgment response to the first remote terminal; and
controlling the at least one transceiver to announce a message including a TAI of a serving cell of the relay terminal based on the announcement request message,
wherein, based on one or more other remote terminals other than the first remote terminal being connected to the relay terminal, the relay terminal transmits a message including the TAI of the serving cell of the relay terminal one or more times.

14. A method of operating a terminal in a wireless communication system, the method comprising:
transmitting, by a remote terminal, an announcement request message requesting announcement of a tracking area identifier (TAI) to a relay terminal;
receiving, by the remote terminal, an announcement response message as an acknowledgment response from the relay terminal; and
receiving a message including a TAI of a serving cell of the relay terminal from the relay terminal based on the announcement request message,
wherein, based on one or more other remote terminals other than the first remote terminal being connected to the relay terminal, the relay terminal transmits a message including the TAI of the serving cell of the relay terminal one or more times.

15. A terminal operating in a wireless communication system comprising:
at least one transceiver;
at least one processor; and
at least one memory operatively connected to the at least one processor and configured to store instructions that, when executed, cause the at least one processor to perform a specific operation,
wherein the specific operation comprises:
controlling the at least one transceiver to transmit an announcement request message requesting announcement of a tracking area identifier (TAI) to a relay terminal;
controlling the at least one transceiver such that the remote terminal receives an announcement response message as an acknowledgment response from the relay terminal; and
controlling the at least one transceiver to receive a message including a TAI of a serving cell of the relay terminal from the relay terminal based on the announcement request message,
wherein, based on one or more other remote terminals other than the first remote terminal being connected to the relay terminal, the relay terminal transmits a message including the TAI of the serving cell of the relay terminal one or more times.

16. An apparatus comprising at least one memory and at least one processor functionally connected to the at least one memory, wherein the at least one processor controls the apparatus to:
receive an announcement request message requesting announcement of a tracking area identity (TAI) from another apparatus;
transmit an announcement response message as an acknowledgment response to the other apparatus; and
announce a message including a TAI of a serving cell of the apparatus based on the announcement request message,
wherein, based on one or more other apparatuses other than the apparatus being connected to the apparatus, the apparatus transmits a message including the TAI of the serving cell of the apparatus one or more times.

17. A non-transitory computer-readable medium storing at least one instruction, comprising the at least one instruction executable by a processor, the at least one instruction controls an apparatus to:
receive an announcement request message requesting announcement of a tracking area identity (TAI) from another apparatus;
transmit an announcement response message as an acknowledgment response to the other apparatus; and
announce a message including a TAI of a serving cell of the apparatus based on the announcement request message,
wherein, based on one or more other apparatuses other than the apparatus being connected to the apparatus, the apparatus transmits a message including the TAI of the serving cell of the apparatus one or more times.
